Europäisches Patentamt

European Patent Office

Office européen des brevets

(11) Publication number: **0 236 943 B1**

(12) **EUROPEAN PATENT SPECIFICATION**

(45) Date of publication of patent specification: **19.05.93** (51) Int. Cl.5: **H04N 5/265**, H04N 5/272

(21) Application number: **87103109.2**

(22) Date of filing: **05.03.87**

Divisional application 92100535.1 filed on 05/03/87.

(54) **Apparatus for combining video signals.**

(30) Priority: **06.03.86 US 836945**

(43) Date of publication of application:
**16.09.87 Bulletin 87/38**

(45) Publication of the grant of the patent:
**19.05.93 Bulletin 93/20**

(84) Designated Contracting States:
**DE FR GB**

(56) References cited:
**EP-A- 0 160 549**
**WO-A-86/06234**
**GB-A- 2 155 729**

**COMPUTER GRAPHICS, vol. 18, no. 3, July 1984, pages 253-259; T. PORTER et al.: "Compositing Digital Images"**

(73) Proprietor: **The Grass Valley Group, Inc.**
**P.O.Box 1114 13024 Bitney Springs Road**
**Grass Valley California 95945(US)**

(72) Inventor: **Jackson, Richard A.**
**10959 Genasci Road**
**Nevada City California 95959(US)**
Inventor: **Windrem, Kevin D.**
**157 Alta Sierra Drive**
**Grass Valley California 95949(US)**

(74) Representative: **Baillie, Iain Cameron et al**
**c/o Ladas & Parry, Altheimer Eck 2**
**W-8000 München 2 (DE)**

## Description

This invention relates to apparatus for combining video signals.

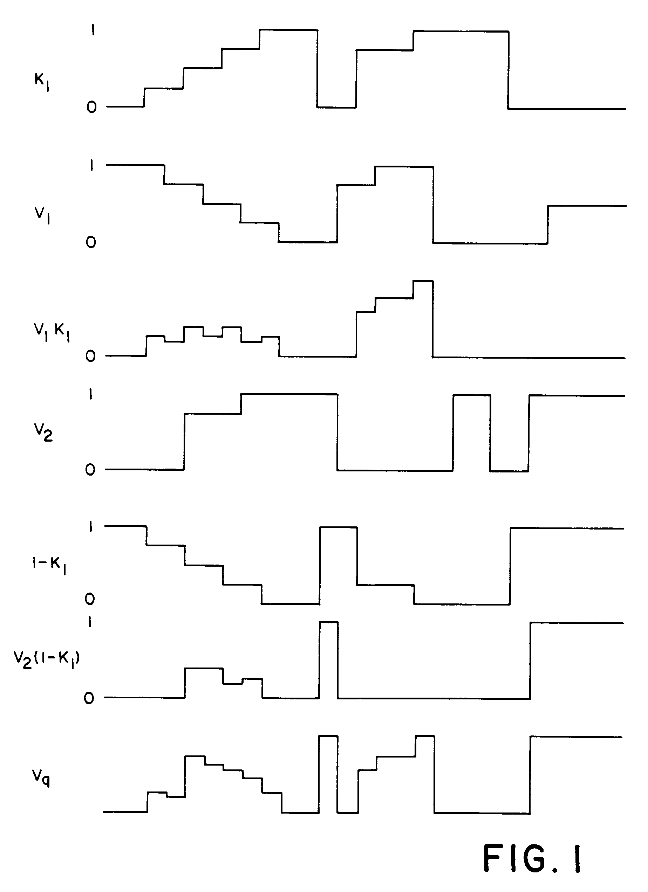

In a video mixer, two video signals $V_1$ and $V_2$ (Fig. 1) are multiplied by a key signal $K_1$ (having a range of values from 0 to 1) and its complement $(1 - K_1)$ respectively, and the two signals $V_1K_1$ and $V_2(1 - K_1)$ are additively combined in a summer to produce a composite output signal $V_q$ having the form $V_1K_1 + V_2(1 - K_1)$. When the key signal $K_1$ is zero, the input signal $V_1$ makes no contribution to the signal $V_q$, regardless of the value of $V_1$. Similarly, if $K_1$ is one, the signal $V_2$ makes no contribution to the signal $V_q$. The proportion of the signal $V_q$ that is contributed by $V_1$ determines the opacity with which the scene represented by the signal $V_1$ is perceived in the composite picture. If $K_1$ is one, i.e., $V_1$ represents 100% of the signal $V_q$, then the $V_1$ scene (the scene represented by the signal $V_1$) completely obscures the $V_2$ scene, regardless of the value of $V_2$. As $K_1$ decreases, the extent to which the $V_2$ scene is obscured in the composite picture is reduced until, when $K_1$ reaches zero, the $V_2$ scene is opaque and completely obscures the $V_1$ scene. Thus, the coefficients $K_1$ and $(1 - K_1)$ determine the relative opacity of the two component scenes: if the coefficient $K_1$ is greater than $(1 - K_1)$, then the $V_1$ scene at least partially obscures the $V_2$ scene and appears, to a viewer of the composite scene, to be in front of the $V_2$ scene.

The multiplication of the signals $V_1$ and $V_2$ by the key signal $K_1$ and its complement $(1 - K_1)$ is shown in FIG. 1, in which it is assumed that all signals have five discrete values in the range from zero to unity and have sharp transitions between levels. It will, of course, be appreciated that FIG. 1 is in fact very much simplified, and that in the case of analog signals the range of possible values is continuous, and that transitions for either analog or digital signals would have a finite slew rate.

A video signal $V_1'$ is said to be a "shaped" video signal when it is the multiplication product of an unshaped video signal $V_1$ and an associated key signal $K_1$. In general, there is no necessary relationship between the video signal and its associated key signal. A production switcher normally receives unshaped video signals and their associated key signals and provides a full screen video signal at its output. No key output is produced.

Shaping has two aspects, namely spatial or X − Y shaping (only the X−dimension is shown in FIG. 1), which determines the area of the composite picture to which the component signal makes a contribution (when $K_1 = 0$, the signal $V_1$ makes no contribution to the signal $V_q$), and opacity or Z shaping, which determines, for $K_1$ greater than zero, the magnitude of the contribution that is made by the component signal to the composite signal $V_q$. The shaping of the component signals is discussed in terms of "coverage" in Porter, T. and Duff, T., "Compositing Digital Images", Computer Graphics, Vol. 18, No. 3 (1984), pages 253 to 259.

The foregoing discussion of the manner of production of the signal $V_q$ is based on the assumption that the signal $V_2$ is a full field signal, i. e. that the key signal $K_2$ associated with the video signal $V_2$ is one for all locations. In the general case, $K_2$ is not one for all locations and

$$V_q = V_1K_1 + V_2K_2(1 - K_1)$$

It will be seen from this more general expression that the video signal $V_q$, being the weighted sum of two shaped video signals $V_1K_1$ and $V_2K_2$, is itself a shaped video signal. For the sake of consistency in notation, the shaped signal that has previously been designated $V_q$ will hereafter be designated $V_q'$, and $V_q$ will hereafter be used to designate the corresponding unshaped signal.

The key signal $K_q$ that relates $V_q'$ to $V_q$ is given by

$$K_q = 1 - (1 - K_1)(1 - K_2)$$

If, for every location, either $K_1$ or $K_2$ is one, then $K_q = 1$ for all locations. In particular, if either $V_1$ or $V_2$ is a full field signal, the signal $V_q'$ is a full field signal. If, on the other hand, $V_q'$ is not a full field signal it might be desired to form a composite scene from the scenes represented by the signal $V_q'$ and, e.g., a background scene represented by a signal $V_r$ having an associated key signal $K_r$. In such a case, the signal $(1 - K_q)$ would be used to process the signal $V_r$ in a production switcher, and an output signal $V_s' = V_q' + V_rK_r(1 - K_q)$ would be produced. Generally, $V_r$ would be a full field signal and so $K_r = 1$ and $V_s' = V_q' + V_r(1 - K_q)$.

Recalling that $V_q' = V_1K_1 + V_2K_2(1 - K_1)$, if $K_1 = 1$, then $V_q' = V_1$, i.e. the signal $V_2$ makes no contribution to the signal $V_q'$, regardless of the value of $K_2$. Therefore, combining of the video signals $V_1$ and $V_2$ is under the primary control of the key signal $K_1$. Similarly, if the signal $V_q'$ were equal to $V_1K_1(1 - K_2) + V_2K_2$, the combining would be under the primary control of the signal $K_2$, and if $K_2 = 1$, then $V_q' = V_2$ and $V_1$ makes no contribution regardless of the value of $K_1$. The two different situations are equivalent respectively to the $V_1$ scene and the $V_2$ scene being in the foreground of the composite scene. However, the conventional mixer does not allow the operator to control on a dynamic basis whether the mixing operation is under the primary control of the signal

$K_1$ or of the signal $K_2$.

According to the present invention there is provided an apparatus for combining a first shaped video signal $V_1 K_1$ and a second shaped video signal $V_2 K_2$ in accordance with a priority signal $P_{12}$ and with first and second key signals $K_1$ and $K_2$, where $V_1$ is a first unshaped video signal, $V_2$ is a second unshaped video signal, $K_1$ is a first key signal associated with the first unshaped video signal and $K_2$ is a second key signal associated with the second unshaped video signal, comprising:

means for generating from said first and second shaped video signals, from said priority signal and from said first and second key signals a third shaped video signal $V_3'$ given by

$$V_3' = V_1 K_1 (1 - K_2 (1 - P_{12})) + V_2 K_2 (1 - K_1 P_{12})$$

and

means for generating from the first and second key signals a third key signal $K_3$ given by

$$K_3 = 1 - (1 - K_1)(1 - K_2).$$

The value of the priority signal $P_{12}$ determines the relative weighting given to the key signals $K_1$ and $K_2$ in forming the third video signal $V_3'$, and this in turn determines whether the scenes represented by the component signals $V_1$ and $V_2$ are perceived in the composite picture as representing foreground objects or background objects. The priority signal $P_{12}$ may be varied over several frames of the video signals, so that the background objects appear to pass through the foreground objects and become foreground objects themselves. In a split–screen effect, by having a change in the value of the priority signal $P_{12}$ occur at the split, objects that appear to be in the foreground on one side of the composite image can be made to appear in the background on the other side of the composite image, and vice–versa.

It will be appreciated that in the context of the present invention, references to component video signals are intended to relate to signals that represent different scenes, and that references to a composite video signal are intended to relate to a signal that represents a scene formed by combining two or more scenes, as represented by respective component video signals.

For a better understanding of the invention, and to show how the same may be carried into effect, reference will now be made, by way of example, to the accompanying drawings in which:

FIG. 1 shows waveforms to illustrate combining of video signals,

FIG. 2 is a block diagram of a combiner cell for combining first and second component video signals,

FIG. 3 is a block diagram of a combiner system comprising several combiner cells connected in a cascade arrangement, and

FIG. 4 is a block diagram of an output processor for a combiner cell.

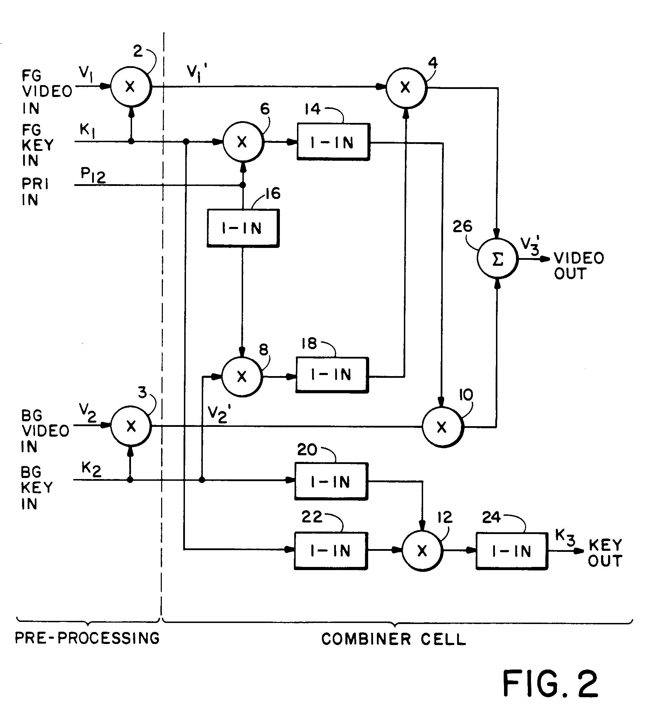

The combiner cell shown in FIG. 2 comprises multipliers 4, 6, 8, 10 and 12, complement circuits 14, 16, 18, 20, 22 and 24, and a summer 26. The illustrated combiner cell operates in the digital domain with parallel data, and therefore all the signal lines that are illustrated would in fact be multiple conductor lines. Additional circuitry would be required to assure proper timing relationships among the various signals, but such matters are well within the skill of the art and therefore are not shown and will not be further described.

The input signals of the combiner cell comprise two shaped video signals $V_1'$ and $V_2'$, associated key signals $K_1$ and $K_2$, and a priority signal $P_{12}$. The levels of the key signals $K_1$ and $K_2$ and the level of the priority signal $P_{12}$ are normalized to have maximum and minimum values that can be represented numerically as 1 and 0. Also, the video signals $V_1'$ and $V_2'$ have the same maximum and minimum values. Additional multipliers 2 and 3 are provided upstream of the combiner for generating the shaped video signals $V_1'$ and $V_2'$ from unshaped video signals $V_1$ and $V_2$ and the associated key signals $K_1$ and $K_2$. The combiner cell provides a shaped output video signal $V_3'$ and an output key signal $K_3$. It can readily be seen that the output video signal is given by the equation

$$V_3' = V_1'[1 - K_2(1 - P_{12})] + V_2'(1 - K_1 P_{12})$$

and that the output key signal is given by

$$K_3 = 1 - (1 - K_1)(1 - K_2).$$

The value of $P_{12}$ determines the weighting factors that are applied to the two video signals $V_1'$ and $V_2'$. If $P_{12}$ is equal to zero, this implies that the $V_2$ scene is in the foreground of the composite scene and that the $V_1$ scene is in the background, and vice versa if $P_{12}$ is equal to one.

For $P_{12} = 0$, then

$$V_3' = V_1'(1 - K_2) + V_2'$$

The value of $K_2$ defines areas in which the $V_2$ scene contributes to the composite scene. If $K_2 = 1$, the contribution of $V_1$ to the composite scene is zero and therefore the $V_2$ scene completely obscures the $V_1$ scene. If $K_2 = 0$, $V_2' = 0$ and therefore there is no contribution from $V_2$ and $V_1$ is allowed to pass to $V_3'$ unaltered

For $P_{12} = 1$, then

$$V_3{}' = V_2{}'(1 - K_1) + V_1{}'$$

The value of $K_1$ defines areas in which the $V_1$ scene contributes to the composite scene. If $K_1 = 1$, the contribution of $V_2$ to the composite scene is zero and therefore the $V_1$ scene completely obscures the $V_2$ scene. If $K_1 = 0$, there is no contribution from $V_1$ and $V_2$ is allowed to pass to $V_3{}'$ unaltered.

For $P_{12} = 0.5$, then

$$V_3{}' = V_1{}'(1 - K_2/2) + V_2{}'(1 - K_1/2)$$

Where $K_2 = 0$, $V_1{}'$ is passed unaltered; where $K_1 = 0$, $V_2{}'$ is passed unaltered; and where $K_2 > 0$ and $K_1 > 0$, the relative opacities of the $V_1$ and $V_2$ scenes are determined by the ratio of $K_1$ and $K_2$.

As $P_{12}$ increases from zero the relative depths of the $V_1$ and $V_2$ pixels in the composite image change, from the $V_2$ pixel appearing in front of the $V_1$ pixel, through the two pixels appearing to be at the same depth (at $P_{12} = 0.5$), to the $V_1$ pixel appearing in front of the $V_2$ pixel. It will therefore be seen that the priority signal $P_{12}$ makes it possible to determine which of the component scenes will appear as the foreground scene in the composite picture. By changing the value of $P_{12}$, the composite picture can be changed so that a component scene is the foreground scene at one time and is the background scene at another time.

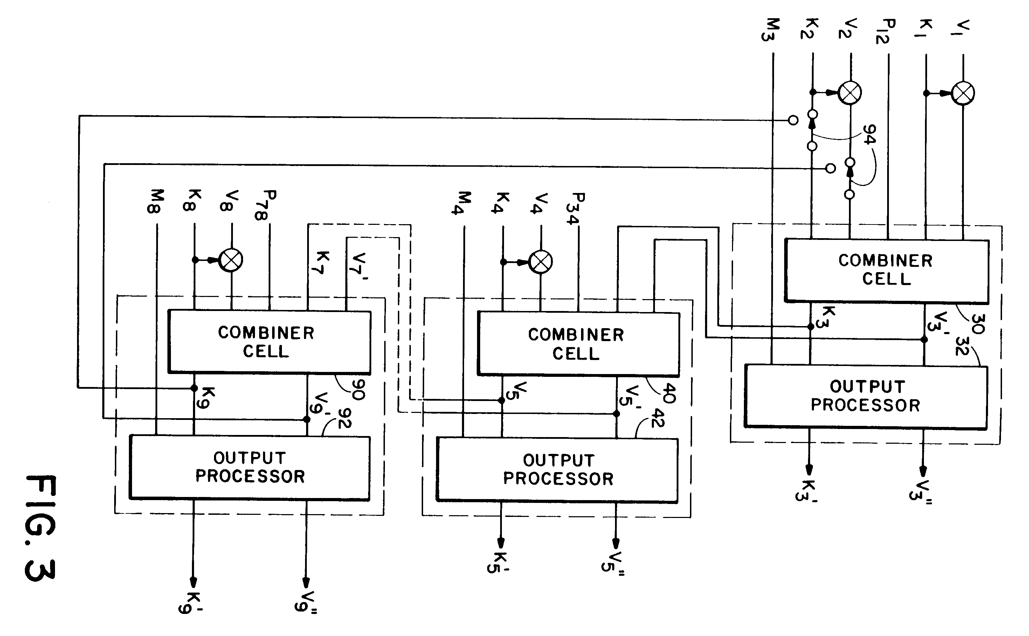

Several combiner cells 30, 40 . . . 90 of the kind shown in FIG. 2 may be connected in cascade, as shown in FIG. 3, to form a combiner system. Output processors 32, 42 . . . 92 are associated with the combiner cells respectively, for a reason which will be explained below. The output signals from the output processors are connected to a production switcher.

Conventional production switchers are designed to receive unshaped video signals and their associated key signals, and multiply the video signals by their key signals to produce shaped video signals that are combined with other shaped video signals, e.g., a signal generated by a digital video effects unit, to produce a final program video signal representing the desired composite picture. The output video signals provided by the combiner cells are already shaped by their respective key signals. If the signal $V_3{}'$, for example, is applied to a conventional production switcher it will be shaped a second time, and the result will be a black halo in the scene represented by the signal $V_3{}'$ for values of $K_3$ greater than zero and less than unity. The output processors are interposed between the combiner cells and the production switcher in order to generate unshaped video signals from the shaped video signals generated by the combiner cells.

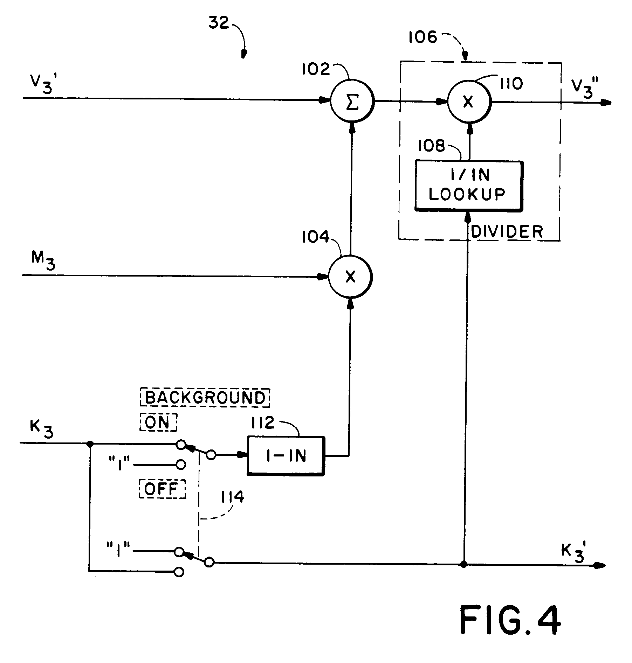

FIG. 4 shows the output processor associated with the combiner cell 30. The other output processors are identical. As shown in FIG. 4, the output processor 32 receives the shaped video signal $V_3{}'$ and the key signal $K_3$ from the associated combiner cell 30, and also receives a video matte signal $M_3$. The signal $M_3$ represents a background for the $V_3$ scene. The background may be, for example, a plain, solid color. The output processor comprises a summer 102, a multiplier 104, a divider 106 (implemented as a reciprocal look-up table 108 and a multiplier 110) and a complement circuit 112. In addition, the processor comprises a switch 114 for selecting one of two operating modes for the processor. The processor provides a composite output video signal $V_3{}''$ and a composite output key signal $K_3{}'$, which are applied as input signals to the production switcher.

In the first mode of operation of the processor (background on), the signal $V_3{}''$ is given by

$$V_3{}'' = V_3{}' + M_3(1 - K_3).$$

Thus, for any pixel for which $K_3$ is zero, $V_3{}' = 0$ and $V_3{}'' = M_3$. If $K_3$ is not zero, indicating that $V_3{}'$ is non-zero, the relative contribution of $V_3{}'$ to $V_3{}''$ depends on the value of $K_3$, and it can be seen that for $K_3 = 1$, $M_3$ is not permitted to make a contribution and $V_3{}'' = V_3{}'$. The output key signal $K_3{}'$ is set to unity for the entire frame in order to inhibit the production switcher from attempting to add another background.

In the second mode of operation (background off), the output key signal $K_3{}'$ is equal to $K_3$, and the production switcher will then add background to pixels for which $K_3{}'$ is not 1.0 in proportion to the value of $(1 - K_3)$. The production switcher will multiply $V_3{}''$ by $K_3{}'$. Since $K_3{}'$ is equal to $K_3$, it is desired for the reason indicated above that $V_3{}''$ not be equal to $V_3{}'$. Therefore, in the second mode the output signal $V_3{}'$ from the summer 102 is divided by the key signal $K_3$, so that

$$V_3{}'' = V_3{}'/K_3.$$

Therefore, the signal $V_3{}''$ is equal to $V_3$ (which does not actually exist), and the switcher may multiply the signal $V_3{}''$ by $K_3{}'$ (which is equal to $K_3$) and produce the desired signal $V_3{}'$ at the switcher output. For pixels at which $K_3$ is close to zero, $V_3{}''$ is indeterminate, but this is not important to the final program video signal because these pixels make no contribution to that signal.

It will be appreciated that the invention is not restricted to the particular apparatus that has been described and illustrated, and that variations may be made therein without departing from the scope of the invention as defined in the appended claims, and equivalents thereof. For example, instead of using interdependent processing circuits for generating, from $K_1$, $K_2$ and $P_{12}$, the multiplication factors for the video signals $V_1$ and $V_2$, these multiplication factors may be generated independently, as mix constants that are separately applied to the multipliers of a signal mixer that is of otherwise conventional form. It is not necessary that each combiner cell of the system shown in FIG. 3 should have its own output processor, since if the output is always to be taken from the same combiner cell, it is necessary only that an output processor be associated with that combiner cell. In a preferred implementation of the invention, the key and video output signals of the last combiner cell in the cascade are connected as inputs to the first combiner cell, so as to establish a closed ring. This provides additional flexibility, in that the ring can be logically broken at any point, allowing additional priority combinations. For example, in the arrangement shown in FIG. 3 the signal $V_4{}'$ can only be combined with the composite signal $V_1{}'/V_2{}'$, and the component signal $V_9{}'$ can only be combined with the composite signal $V_1{}'/ . . ./V_8{}'$. The scene represented by the signal $V_9{}'$ cannot be made to appear behind the $V_1$ scene but in front of the $V_4$ scene. However, if the switches 94 are operated so that the output signals $V_9{}'$ and $K_9$ are applied to the combiner cell 30 in lieu of the input signals $V_2{}'$ and $K_2$, and $P_{12}$ and $P_{34}$ are set to unity, the desired composite signal would be provided at the output of the output processor 42 ($V_5{}''$, $K_5{}'$). The key signal $K_5$ must be forced to zero inside the combiner cell 90.

It will also be appreciated that although the preferred embodiment of the invention, described above with reference to the drawings, is implemented using parallel digital data, it could also be implemented using serial digital data or analog data.

## Claims

1. Apparatus for combining a first shaped video signal $V_1 K_1$ and a second shaped video signal $V_2 K_2$ in accordance with a priority signal $P_{12}$ and with first and second key signals $K_1$ and $K_2$, where $V_1$ is a first unshaped video signal, $V_2$ is a second unshaped video signal, $K_1$ is a first key signal associated with the first unshaped video signal and $K_2$ is a second key signal associated with the second unshaped video signal, comprising:

means (6 – 10, 14 – 18, 26) for generating from said first and second shaped video signals, from said priority signal and from said first and second key signals a third shaped video signal $V_3{}'$ given by

$$V_3{}' = V_1 K_1 (1 - K_2 (1 - P_{12})) + V_2 K_2 (1 - K_1 P_{12})$$

and
means (12, 20 – 24) for generating from the first and second key signals a third key signal $K_3$ given by

$$K_3 = 1 - (1 - K_1)(1 - K_2).$$

2. Apparatus according to claim 1, further comprising an output processor (32) for receiving the third shaped video signal $V_3{}'$ and the third key signal $K_3$, said output processor being operative in a first mode to generate an output signal $V_3{}''$ given by

$$V_3{}'' = V_3{}' + A$$

where A is a function of the third key signal and is independent of $V_3{}'$, and a key signal $K_3{}'$ having a constant value.

3. Apparatus according to claim 2, wherein the output processor is operative in a second mode to provide the output signal $V_3{}''$ as a function that is directly proportional to the ratio of $V_3{}'/K_3$, and the key signal $K_3{}'$ as a function that is directly proportional to the third key signal $K_3$.

4. Apparatus according to claim 2, wherein the output processor has an input terminal for receiving a matte signal $M_3$ and is operative in the first mode to generate the output video signal $V_3{}''$ where

$$V_3{}'' = V_3{}' + M_3 (1 - K_3).$$

5. A combiner system for combining a plurality of shaped video signals in accordance with associated respective key signals and priority signals, comprising first and second apparatus according to claim 1, with the third video signal and the third key signal of the first apparatus connected as the first video signal and the first key signal of the second apparatus.

6. Apparatus for combining more than two shaped video signals, each shaped video signal having an associated key signal, as a function of a plurality of priority signals characterized by:

a plurality of combiner cells (30, 40, 90), each combiner cell comprising apparatus according to claim 1 to combine two shaped video signals and associated key signals as a function of one of the plurality of priority sig − nals, the combiner cells being coupled in cascade so that a shaped video output signal and associated key signal from one cell is one of the shaped video signals and associated key signals input to a succeeding cell, the other input of each combiner cell being one of the shaped video signals and associated key signal to be combined; and

a plurality of output processors (32, 42, 92), one for each of the combiner cells, having as inputs the output shaped video signal and associated key signal from the respective combiner cells and having as outputs an un − shaped video signal and associated key signal.

7. A combiner system as recited in claim 6 fur − ther comprising means (94) for applying the outputs from the last combiner cell in the cascade to the inputs of the first combiner cell in the cascade in lieu of one of the shaped video signals and associated key signal to establish a closed ring.

8. Apparatus for combining more than two shaped video signals, each shaped video sig − nal having an associated key signal, as a function of a plurality of priority signals char − acterized by:

a plurality of combiner cells (30, 40, 90), each combiner cell comprising apparatus ac − cording to claim 1 to combine two shaped video signals and associated key signals as a function of one of the plurality of priority sig − nals, the combiner cells being coupled in cascade so that a shaped video output signal and associated key signal from one cell is one of the shaped video signals and associated key signals input to a succeeding cell, the other input of each combiner cell being one of the shaped video signals and associated key signal to be combined; and

an output processor having as inputs the output shaped video signal and associated key signal from a predetermined one of the com − biner cells and having as outputs an unshaped video signal and associated key signal.

9. A combiner system as recited in claim 8 fur − ther comprising means for applying the out − puts from the last combiner cell in the cascade to the inputs of the first combiner cell in the cascade in lieu of one of the shaped video signals and its associated key signal to es − tablish a closed ring.

**Patentansprüche**

1. Vorrichtung zur Kombination eines ersten ge − formten Videosignals $V_1 K_1$ und eines zweiten geformten Videosignals $V_2 K_2$ gemäß eines Prioritätssignals $P_{12}$ und mit den ersten und zweiten Schlüsselsignalen $K_1$ und $K_2$, wobei es sich bei $V_1$ um ein erstes ungeformtes Video − signal handelt, und wobei es sich bei $V_2$ um ein zweites ungeformtes Videosignal handelt, dadurch gekennzeichnet, daß $K_1$ ein erstes Schlüsselsignal darstellt, das dem ersten un − geformten Videosignal zugeordnet ist, sowie dadurch gekennzeichnet, daß $K_2$ ein zweites Schlüsselsignal darstellt, das dem zweiten ungeformten Videosignal zugeordnet ist, wobei die Vorrichtung folgendes umfaßt:

eine Einrichtung (6 − 10, 14 − 18, 26) zur Erzeugung eines dritten geformten Videosi − gnals $V_3'$ durch die genannten ersten und zweiten geformten Videosignale, durch das genannte Prioritätssignal und durch die ge − nannten ersten und zweiten Schlüsselsignale, wobei $V_3'$ sich wie folgt ergibt:

$$V_3' = V_1 K_1 (1 - K_2 (1 - P_{12})) + V_2 K_2 (1 - K_1 P_{12})$$

und

eine Einrichtung (12, 20 − 24) zur Erzeu − gung eines dritten Schlüsselsignals $K_3$ durch die ersten und zweiten Schlüsselsignale, wobei sich $K_3$ wie folgt ergibt:

$$K_3 = 1 - (1 - K_1)(1 - K_2).$$

2. Vorrichtung nach Anspruch 1, ferner gekenn − zeichnet durch einen Ausgangsprozessor (32) zum Empfangen des dritten geformten Video − signals $V_3'$ sowie des dritten Schlüsselsignals $K_3$, wobei der genannte Ausgangsprozessor in einer ersten Betriebsart betrieben werden kann, um ein Ausgangssignal $V_3''$ zu erzeugen, welches durch

$$V_3'' = V_3' + A,$$

gegeben ist, wobei A eine Funktion des dritten Schlusselsignals und von $V_3'$ unabhängig ist, und ein Schlüsselsignal $K_3'$, das einen kon − stanten Wert besitzt.

3. Vorrichtung nach Anspruch 2, dadurch ge − kennzeichnet, daß der Ausgangsprozessor in einer zweiten Betriebsart betrieben werden kann, um das Ausgangssignal $V_3''$ als eine Funktion bereitzustellen, die direkt proportional zu dem Verhältnis von $V_3'/K_3$ ist, und um das Schlüsselsignal $K_3'$ als eine Funktion bereit −

zustellen, die direkt proportional zu dem dritten Schlüsselsignal $K_3$ ist.

4. Vorrichtung nach Anspruch 2, dadurch gekennzeichnet, daß der Ausgangsprozessor einen Eingangsanschluß zum Empfang eines Abdecksignals $M_3$ aufweist, und wobei der Ausgangsprozessor in der ersten Betriebsart betriebsbereit ist, um das Ausgangsvideosignal $V_3''$ zu erzeugen, wobei

$V_3'' = V_3' + M_3(1 - K_3)$ ist.

5. Ein Kombinationssystem zur Kombination einer Mehrzahl geformter Videosignale gemäß den entsprechenden zugeordneten Schlüsselsignalen sowie Prioritätssignalen, dadurch gekennzeichnet, daß das System die ersten und zweiten Vorrichtungen nach Anspruch 1 umfaßt, wobei das dritte Videosignal und das dritte Schlüsselsignal der ersten Vorrichtung verbunden sind, als das erste Videosignal und das erste Schlüsselsignal der zweiten Vorrichtung.

6. Vorrichtung zur Kombination von mehr als zwei geformten Videosignalen, wobei jedes geformte Videosignal ein zugeordnetes Schlüsselsignal aufweist, als eine Funktion einer Mehrzahl von Prioritätssignalen, gekennzeichnet durch:

eine Mehrzahl von Kombinationszellen (30, 40, 90), wobei jede Kombinationszelle die Vorrichtung nach Anspruch 1 umfaßt, um zwei geformte Videosignale und zugeordnete Schlüsselsignale als eine Funktion eines der Prioritätssignale aus der Mehrzahl der Prioritätssignale zu kombinieren, dadurch gekennzeichnet, daß die Kombinationszellen als Kaskade gekoppelt sind, so daß ein geformtes Ausgangsvideosignal und das dem zugeordnete Schlüsselsignal einer Zelle, eines der geformten Eingangsvideosignale und das dem zugeordnete Schlüsselsignal einer folgenden Zelle darstellt, wobei der andere Eingang jeder Kombinationszelle durch eines der zu kombinierenden geformten Videosignale und dem ihm zugeordneten Schlüsselsignal dargestellt wird; und

eine Mehrzahl von Ausgangsprozessoren (32, 42, 92), je einer für eine Kombinationszelle, die als Eingänge das geformte Ausgangsvideosignal der entsprechenden Kombinationszelle und das dem zugeordnete Schlüsselsignal aufweisen und die als Ausgänge ein ungeformtes Bildsignal und das dem zugeordnete Schlüsselsignal aufweisen.

7. Kombinationssystem nach Anspruch 6, ferner gekennzeichnet durch eine Einrichtung (94) zum Anlegen der Ausgänge aus der letzten Kombinationszelle der Kaskade an die Eingänge der ersten Kombinationszelle der Kaskade, und zwar an Stelle eines der geformten Videosignale sowie dem zugeordneten Schlüsselsignal, um so einen geschlossenen Kreis zu bilden.

8. Vorrichtung zur Kombination von mehr als zwei geformten Videosignalen, dadurch gekennzeichnet, daß jedes geformte Videosignal ein zugeordnetes Schlüsselsignal besitzt, als eine Funktion einer Mehrzahl von Prioritätssignalen, gekennzeichnet durch:

eine Mehrzahl von Kombinationszellen (30, 40, 90), wobei jede Kombinationszelle die Vorrichtung nach Anspruch 1 umfaßt, um zwei geformte Videosignale und zugeordnete Schlüsselsignale als eine Funktion eines der Prioritätssignale aus der Mehrzahl der Prioritätssignale zu kombinieren, dadurch gekennzeichnet, daß die Kombinationszellen als Kaskade gekoppelt sind, so daß ein geformtes Ausgangsvideosignal und das zugeordnete Schlüsselsignal einer Zelle, eines der geformten Eingangsvideosignale und das zugeordnete Schlüsselsignal einer folgenden Zelle darstellt, wobei der andere Eingang jeder Kombinationszelle durch eines der zu kombinierenden geformten Videosignale und dem zugeordneten Schlüsselsignal dargestellt wird; und

einen Ausgangsprozessor, der als Eingänge das geformte Ausgangsvideosignal und das dem zugeordnete Schlüsselsignal einer vorher bestimmten Kombinationszelle aufweist und der als Ausgänge ein ungeformtes Videosignal und das dem zugeordnete Schlüsselsignal aufweist.

9. Kombinationssystem nach Anspruch 8, ferner gekennzeichnet durch eine Einrichtung zum Anlegen der Ausgänge aus der letzten Kombinationszelle der Kaskade an die Eingänge der ersten Kombinationszelle der Kaskade, und zwar an Stelle eines der geformten Videosignale und dessen zugeordnetem Schlüsselsignal, um so einen geschlossenen Kreis zu bilden.

**Revendications**

1. Appareil pour mélanger un premier signal vidéo mis en forme $V_1K_1$ et un second signal vidéo mis en forme $V_2K_2$ conformément à un signal de priorité $P_{12}$ et à des premier et second signaux de codage $K_1$ et $K_2$ où $V_1$ est

un premier signal vidéo non mis en forme, $V_3$ est un second signal vidéo non mis en forme, $K_1$ est un premier signal de codage associé au premier signal vidéo non mis en forme et $K_2$ est un second signal de codage associé au second signal vidéo non mis en forme, comprenant:

un moyen (6 – 10, 14 – 18, 26) pour générer à partir desdits premier et second signaux vidéo mis en forme, à partir dudit signal de priorité et à partir desdits premier et second signaux de codage, un troisième signal vidéo mis en forme $V_3'$ donné par

$$V_3' = V_1 K_1 (1 - K_2(1 - P_{12})) + V_2 K_2 (1 - K_1 P_{12})$$

et

un moyen (12, 20 – 24) pour générer à partir des premiers et second signaux, un troisième signal de codage $K_3$ donné par

$$K_3 = 1 - (1 - K_1)(1 - K_2).$$

2.  Appareil selon la revendication 1, comprenant en outre, un processeur de sortie vidéo (32) pour recevoir le troisième signal vidéo mis en forme $V_3'$ et le troisième signal de codage $K_3$, ledit processeur de sortie étant fonctionnel dans un premier mode pour générer un signal de sortie $V_3''$ donné par

$$V_3'' = V_3' + A$$

où A est fonction du troisième signal de codage et est indépendant de $V_3'$ et d'un signal de codage $K_3'$ ayant une valeur constante.

3.  Appareil selon la revendication 2, dans lequel le processeur de sortie est fonctionnel dans un second mode pour fournir le signal de sortie $V_3''$ qui est une fonction directement proportionnelle au rapport $V_3'/K_3$ et le signal de codage $K_3'$ qui est une fonction directement proportionnelle au troisième signal de codage $K_3$.

4.  Appareil selon la revendication 2, dans lequel le processeur de sortie a une borne d'entrée pour recevoir un signal mat $M_3$ et est fonctionnel dans le premier mode pour générer le signal vidéo de sortie $V_3''$ où

$$V_3'' = V_3' + M_3(1 - K_3).$$

5.  Un système mélangeur pour mélanger une pluralité de signaux vidéo mis en forme conformément aux signaux de codage respectifs associés et aux signaux de priorité, comprenant un premier et second appareil selon la revendication 1, avec le troisième signal vidéo et le troisième signal de codage du premier appareil reliés comme premier signal vidéo et premier signal de codage du second appareil.

6.  Appareil pour mélanger plus que deux signaux vidéo mis en forme, chaque signal vidéo mis en forme ayant un signal de codage associé, étant fonction d'une pluralité de signaux de priorité caractérisé par:

une pluralité de cellules mélangeuses (30, 40, 90), chaque cellule mélangeuse comprenant un appareil selon la revendication 1 pour mélanger deux signaux vidéo mis en forme et les signaux de codage associés étant fonction d'une pluralité de signaux de priorité, les cellules mélangeuses étant couplées en cascade de sorte qu'un signal de sortie vidéo mis en forme et un signal de codage associé d'une cellule, est un des signaux vidéo mis en forme et une entrée des signaux de codage associés pour une cellule suivante, l'autre entrée de chaque cellule mélangeuse étant un des signaux vidéo mis en forme et un signal de codage associé à mélanger; et

une pluralité de processeurs de sortie (32, 42, 92), un pour chacune des cellules mélangeuses, ayant comme entrées le signal vidéo de sortie mis en forme et le signal de codage associé des cellules mélangeuses respectives et ayant comme sorties un signal vidéo non mis en forme et un signal de codage associé.

7.  Système mélangeur selon la revendication 6 comprenant en outre un moyen (94) pour appliquer les sorties de la dernière cellule mélangeuse en cascade aux entrées de la première cellule mélangeuse en cascade au lieu d'un des signaux vidéo mis en forme et du signal de codage associé pour établir une boucle fermée.

8.  Appareil pour mélanger plus que deux signaux vidéo mis en forme, chaque signal vidéo mis en forme ayant un signal de codage associé, étant fonction d'une pluralité de signaux de priorité caractérisé par:

une pluralité de cellules mélangeuses (30, 40, 90), chaque cellule mélangeuse comprenant un appareil selon la revendication 1 pour mélanger deux signaux vidéo mis en forme et les signaux de codage associés étant fonction d'une pluralité de signaux de priorité, les cellules mélangeuses étant couplées en cascade de sorte qu'un signal de sortie vidéo mis en forme et un signal de codage associé d'une cellule, est un des signaux vidéo mis en forme et une entrée des signaux de codage associés pour une cellule suivante, l'autre entrée de chaque cellule mélangeuse étant un des signaux vidéo mis en forme et un signal de codage associé à mélanger; et

un processeur de sortie ayant comme entrée le signal vidéo de sortie mis en forme et le signal de codage associé d'une des cellules mélangeuses, prédéterminée et ayant comme sorties un signal vidéo non mis en forme et un signal de codage associé.

9. Système mélangeur selon la revendication 8 comprenant en outre un moyen pour appliquer les sorties de la dernière cellule mélangeuse en cascade aux entrées de la première cellule mélangeuse en cascade au lieu d'un des signaux vidéo mis en forme et de son signal de codage associé pour établir une boucle fermée.

$K_1$

$V_1$

$V_1 K_1$

$V_2$

$1-K_1$

$V_2(1-K_1)$

$V_q$

# FIG. 1

EP 0 236 943 B1

FIG. 2

11

FIG. 3

FIG.4